# EUROPEAN PATENT APPLICATION

(11) **EP 4 848 495 A1**
(43) Date of publication of application: **02.12.2026**
(21) Application number: 26168365.0
(22) Date of filing: 27.03.2026
(51) Int. Cl.: H01R 31/06, G06F 1/16, H02J 7/70

(54) **L-SHAPED ADAPTER ADAPTED TO ELECTRONIC DEVICES WITH DIFFERENT THICKNESSES**

(30) Priority: 30.05.2025 CN 202521092633 U
(71) Applicant: Shenzhen DeOne Innovation Technology Co., Ltd, Shenzhen, Guangdong 518129 (CN)
(72) Inventor: XU, Jun, Shenzhen, 518129 (CN); JIANG, Dezhong, Shenzhen, 518129 (CN)
(74) Representative: Meyer-Dulheuer MD Legal Patentanwälte PartG mbB

(57) **Abstract**

The L-shaped adapter includes a first main body and a second main body; the first main body is connected to the second main body, and an extending direction of the first main body intersects with an extending direction of the second main body; the second main body is provided with a first connecting member for connecting to an electronic device, and an extending direction of the first connecting member is parallel to the extending direction of the first main body; the first main body is provided with a second connecting member for connecting to an external device connected to the electronic device; a plate member is detachably connected to a side of the first main body that is close to the first connecting member, so as to adjust a distance between the first main body and the first connecting member.

## Description

### TECHNICAL FIELD

The present disclosure relates to the technical field of data transmission and, in particular, to an L-shaped adapter adapted to electronic devices with different thicknesses.

### BACKGROUND

To achieve miniaturization of electronic devices, an interface is provided on each electronic device. When the electronic device needs to be connected to an external device, but the interface of the external device does not match that of the electronic device, an adapter is required to bridge the external device and the electronic device.

Typically, the interface of the electronic device is configured as a first female connector, and the adapter is provided with a first connecting member which is configured as a male connector for insertion into the first female connector. The adapter is further provided with a second female connector for connecting the external device, and the second female connector is configured to accommodate the male connector of the external device so as to realize connection between the external device and the electronic device.

Most adapters available on the market are L-shaped adapters, which change the connection position of the external device. Compared with linear adapters, L-shaped adapters make the center of gravity of an assembly of an adapter and an electronic device closer to that of the electronic device alone, thereby avoiding center-of-gravity offset of the assembly of an adapter and an electronic device and preventing adverse effects on user experience.

L-shaped adapters are applied to electronic devices with different thicknesses, such as electronic devices with protective cases and those without protective cases. If an L-shaped adapter is used on an electronic device with a protective case, the distance between the first connecting member and the adapter may be smaller than the distance from the interface of the electronic device to the outer side of the protective case, resulting in failure of normal use of the L-shaped adapter.

Alternatively, an L-shaped adapter applicable to electronic devices with protective cases may, when used on an electronic device without a protective case, produce a gap between the adapter and the outer surface of the electronic device because the distance between the first connecting member and the adapter is greater than the distance from the interface of the electronic device to the outer surface of the electronic device. In the event of collision against the adapter, the first connecting member inserted into the electronic device is prone to damage.

### SUMMARY

The purpose of the present disclosure is to provide an L-shaped adapter adapted to electronic devices with different thicknesses in view of the defects and insufficiencies of the prior art. By detachably connecting a plate member to a first main body, a distance between the first main body and a first connecting member is changed, so as to adapt to an electronic device with or without protective case, and an electronic device having different distances from the interface to the outer surface of the electronic device and to the outer surface of a protective case, thereby improving the adaptability of the L-shaped adapter. Moreover, with the arrangement of the plate member, the first main body comes into contact with the outer surface of a protective case or the outer surface of an electronic device, thereby avoiding damage to the first connecting member caused by collision applied to the adapter and prolonging the service life of the L-shaped adapter.

To achieve the above purpose, the technical solution adopted by the present disclosure is as follows: An L-shaped adapter adapted to electronic devices with different thicknesses includes a first main body and a second main body; the first main body is connected to the second main body, and an extending direction of the first main body intersects with an extending direction of the second main body; the second main body is provided with a first connecting member for connecting to an electronic device, and an extending direction of the first connecting member is parallel to the extending direction of the first main body; the first main body is provided with a second connecting member for connecting to an external device connected to the electronic device; a plate member is detachably connected to a side of the first main body that is close to the first connecting member, so as to adjust a distance between the first main body and the first connecting member.

Based on the technical solution described above, the present disclosure has the following beneficial effects: By detachably connecting the plate member to the first main body, the distance between the first main body and the first connecting member is changed, so as to adapt to an electronic device with or without a protective case, and an electronic device having different distances from the interface to the outer surface of the electronic device and to the outer surface of a protective case, thereby improving the adaptability of the L-shaped adapter. Moreover, with the arrangement of the plate member, the first main body comes into contact with the outer surface of a protective case or the outer surface of an electronic device, thereby avoiding damage to the first connecting member caused by collision applied to the adapter, and prolonging the service life of the L-shaped adapter.

### BRIEF DESCRIPTION OF DRAWINGS

In order to more clearly illustrate the technical solutions in the embodiments of the present disclosure or the prior art, the following is a brief introduction to the drawings required for the description of the embodiments or the prior art. Obviously, the drawings described below merely illustrate some embodiments of the present disclosure. For those of ordinary skill in the art. other drawings may be obtained on the basis of the following ones without creative labor.
FIG. 1 is a structural schematic view of an L-shaped adapter according to an embodiment of the present disclosure.
FIG. 2 is an exploded schematic view of the L-shaped adapter according to an embodiment of the present disclosure.
FIG. 3 is an exploded schematic view of a plate member according to an embodiment of the present disclosure.
FIG. 4 is an exploded schematic view of a first main body and a second main body according to an embodiment of the present disclosure.
FIG. 5 is a cross-sectional view taken along a line A-A' in FIG. 1.

Reference numerals: 100. adapter; 10. first main body; 11. first magnetic member; 12. first positioning portion; 13. first notch; 20. second main body; 30. first connecting member; 40. second connecting member; 50. plate member; 51. first magnetic mating member; 52. soft member; 53. adhesive member; 54. second positioning portion; 55. second notch; 56. avoidance notch; 60. flexible connecting member; 70. fixing member; 80. screw; 90. circuit board; 101. front cover; 102. rear shell; 103. middle frame; 104. top cover; X. vertical direction.

### DESCRIPTION OF EMBODIMENTS

The present disclosure is described in further detail below in conjunction with the accompanying drawings.

The present specific embodiment is merely used for explaining the present disclosure rather than limiting the present disclosure. Those skilled in the art may make modifications to this embodiment without creative contribution after reading this specification. Such modifications shall be protected by the Patent Law, provided that they fall within the scope of the claims of the present disclosure.

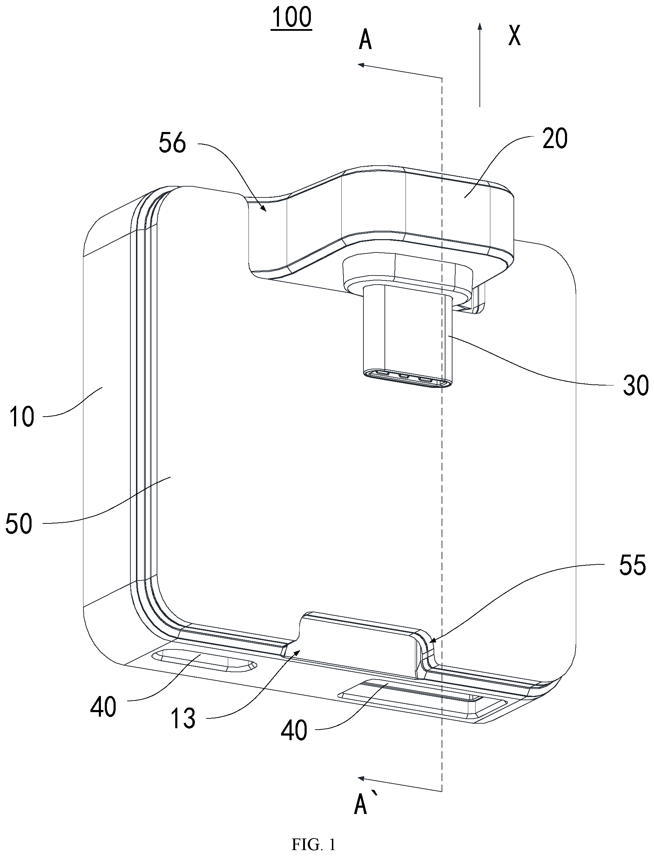

As shown in FIGS. 1-2, the present embodiment relates to an L-shaped adapter 100 adapted to electronic devices with different thicknesses. The L-shaped adapter 100 includes a first main body 10 and a second main body 20. The first main body 10 is connected to the second main body 20. An extending direction of the first main body 10 intersects with that of the second main body 20, and the first main body 10 and the second main body 20 form an L shape.

In the present embodiment, the extending direction of the first main body 10 is perpendicular to that of the second main body 20.

The second main body 20 is provided with a first connecting member 30 for connecting to an electronic device. The first main body 10 is provided with a second connecting member 40 for connecting to an external device connected to the electronic device.

In an implementation mode, the first connecting member 30 is configured as a male connector for insertion into a first female connector of the electronic device. The second connecting member 40 is configured as a second female connector for insertion of a male connector of the external device. With the above configurations, the external device is connected to the electronic device.

An extending direction of the first connecting member 30 is parallel to that of the first main body 10.

In an implementation mode, since the extending direction of the first connecting member 30 is parallel to that of the first main body 10, when the first connecting member 30 is inserted into a first female connector of the electronic device, the first main body 10 is located at a back side of the electronic device. When a distance from the first connecting member 30 to the first main body 10 is greater than a distance from the first female connector to an outer surface of the electronic device, a gap is formed between the first main body 10 and the outer surface of the electronic device. In this case, a collision applied to the first main body 10 tends to cause the first main body 10 to move at least partially toward the electronic device, thereby driving at least part of the second main body 20 to move. Since the first connecting member 30 is inserted into the first female connector of the electronic device, the first connecting member 30 is liable to be damaged, thus reducing the service life of the L-shaped adapter 100. Therefore, when the L-shaped adapter 100 is in use, the first main body 10 should be attached to the back side of the electronic device, so as to prevent the first connecting member 30 from being damaged due to wobbling of the first main body 10.

A plate member 50 is detachably connected to a side of the first main body 10 that is close to the first connecting member 30, so as to adjust a distance between the first main body 10 and the first connecting member 30. By detachably connecting the plate member 50 to the first main body 10, the distance between the first main body 10 and the first connecting member 30 is changed based on the thickness of the plate member 50, so as to adapt to an electronic device with or without a protective case, and an electronic device having different distances from the interface to the outer surface of the electronic device and to the outer surface of a protective case, thereby improving the adaptability of the L-shaped adapter. Moreover, with the arrangement of the plate member 50, the first main body 10 comes into contact with the outer surface of the protective case or the outer surface of the electronic device, thereby avoiding damage to the first connecting member 30 caused by collision applied to the adapter 100, and prolonging the service life of the L-shaped adapter 100.

In addition, the L-shaped adapter 100 can be adapted to electronic devices with different thicknesses by selecting plate members 50 with different thicknesses.

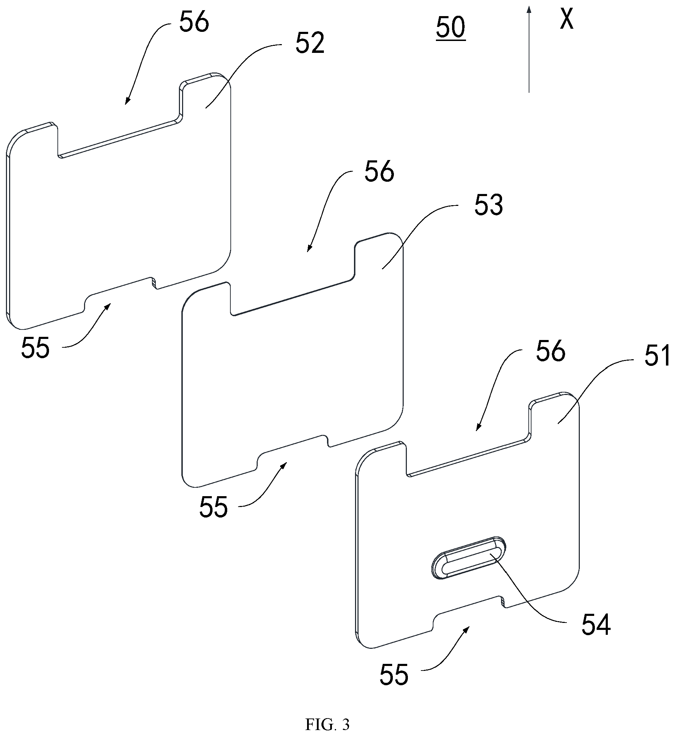

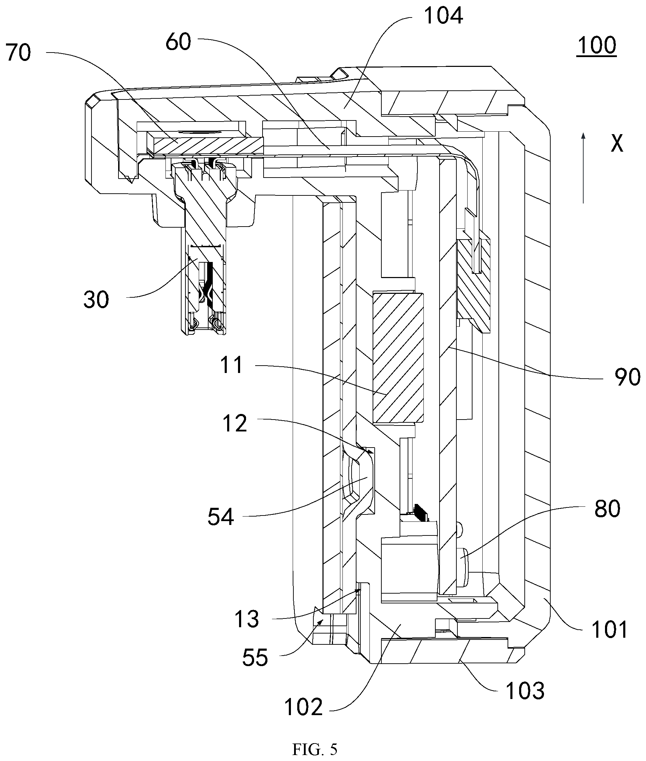

As shown in FIGS. 3-5, the plate member 50 is magnetically connected to the first main body 10.

In a first embodiment, a first magnetic member 11 is arranged in the first main body 10. The plate member 50 includes a first magnetic mating member 51. The first magnetic member 11 and the first magnetic mating member 51 attract each other to magnetically connect the first main body 10 and the plate member 50. In an implementation mode, the first magnetic member 11 is configured as a magnet, and the first magnetic mating member 51 is configured as an iron sheet.

In a second embodiment, a second magnetic mating member is arranged in the first main body 10, and the plate member 50 includes a second magnetic member. The second magnetic member and the second magnetic mating member attract each other to magnetically connect the first main body 10 and the plate member 50.

In a third embodiment, a first magnetic member 11 is arranged in the first main body 10, and the plate member 50 includes a second magnetic member. The first magnetic member 11 and the second magnetic member attract each other to magnetically connect the first main body 10 and the plate member 50.

As shown in FIG. 3, the plate member 50 includes a soft member 52 arranged on a side of the first magnetic mating member 51 that is away from the first main body 10, thereby preventing the first magnetic mating member 51 from scratching the electronic device or a protective case of the electronic device.

In the present embodiment, the soft member 52 and the first magnetic mating member 51 are fixedly connected by an adhesive member 53.

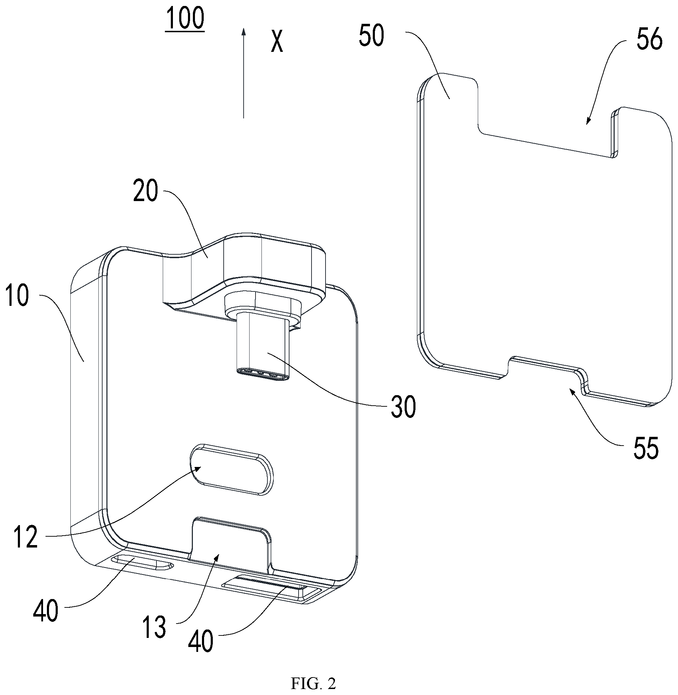

As shown in FIGS. 2-3 and 5, the first main body 10 is provided with a first positioning portion 12, and the plate member 50 is provided with a second positioning portion 54. The first positioning portion 12 is fitted into the second positioning portion 54, or the second positioning portion 54 is fitted into the first positioning portion 12, so as to position and assemble the plate member 50 and the first main body 10.

In the present embodiment, the first positioning portion 12 is configured as a racetrack-shaped groove, and the second positioning portion 54 is configured as a racetrack-shaped protrusion. When the plate member 50 is assembled to the first main body 10, the racetrack-shaped protrusion is fitted into the racetrack-shaped groove to position and assemble the plate member 50 and the first main body 10.

In other embodiments, the first positioning portion 12 is configured as a protrusion, and the second positioning portion 54 is configured as a groove. When the plate member 50 is assembled to the first main body 10, the protrusion is fitted into the groove to position and assemble the plate member 50 and the first main body 10.

In other embodiments, the groove may be one of a circle, an ellipse and a polygon, and the shape of the protrusion is adapted to the shape of the groove.

As shown in FIGS. 1-2 and 5, a first notch 13 is provided at the bottom of the first main body 10, thereby facilitating removal of the plate member 50.

In the present embodiment, the first notch 13 opens downward, such that a gap is formed between the bottom of the plate member 50 and a bottom surface of the first notch 13. The bottom surface of the first notch 13 is specifically the surface of the first notch 13 that is parallel to the extending direction of the first connecting member 30. A user can insert a part of a finger into the gap between the plate member 50 and the first notch 13 to remove the plate member 50, thereby facilitating detachment of the plate member 50.

In other embodiments, the first notch 13 opens sideways, and the user can insert a part of a finger into the first notch 13 from a side to remove the plate member 50, thereby facilitating detachment of the plate member 50.

As shown in FIGS. 1, 3 and 5, the plate member 50 is provided with a second notch 55 at a position corresponding to the first notch 13. The arrangement of the second notch 55 increases the contact area between the user's finger and the plate member 50 during detachment of the plate member 50, so as to increase the friction between the finger and the plate member 50 and further facilitate detachment of the plate member 50. Moreover, the arrangement of the second notch 55 prompts the user of the position of the first notch 13 during use, improving user experience.

As shown in FIGS. 1-3 and 5, the dimension of the first notch 13 in a vertical direction X is larger than that of the second notch 55 in the vertical direction X. Thus, in the vertical direction X of the second notch 55, the plate member 50 and the first main body 10 are spaced apart by the first notch 13, so as to facilitate detachment of the plate member 50.

In a second embodiment, the dimension of the first notch 13 in a transverse direction is larger than that of the second notch 55 in the transverse direction. Thus, in the transverse direction of the second notch 55, the plate member 50 and the first main body 10 are spaced apart by the first notch 13, so as to facilitate detachment of the plate member 50.

In a third embodiment, the dimension of the first notch 13 in the vertical direction X is larger than that of the second notch 55 in the vertical direction X. The dimension of the first notch 13 in the transverse direction is larger than that of the second notch 55 in the transverse direction. Thus, in both the transverse direction and the vertical direction X of the second notch 55, the plate member 50 and the first main body 10 are spaced apart by the first notch 13, so as to facilitate detachment of the plate member 50.

As shown in FIGS. 1, 3 and 5, an avoidance notch 56 for avoiding the second main body 20 is provided at the top of the plate member 50, so as to completely cover a side of the first main body 10 that is close to the electronic device. This design can avoid a gap between the top of the first main body 10 and the electronic device which would cause the first main body 10 to wobble easily, thereby preventing damage to the first connecting member 30, and further prolonging the service life of the L-shaped adapter 100.

As shown in FIGS. 1-2 and 4, the first main body 10 is provided with two second connecting members 40, one of which is used for charging and the other for data transmission.

In an implementation mode, the first connecting member 30 is electrically connected to the two second connecting members 40 by means of a circuit board 90. A charging communication protocol and a data transmission communication protocol are respectively written into the circuit board 90, so as to prevent damage to the second connecting members 40 due to the absence of corresponding communication protocols.

In a further implementation mode, a charging communication protocol is written into the circuit board 90 connected to one of the second connecting members 40 to support charging up to 100 W. A data transmission communication protocol is written into the circuit board 90 connected to the other second connecting member 40 to support high-speed transmission of data such as video data and audio data.

In the present embodiment, the first connecting member 30 is configured as a USB-C plug. One second connecting member 40 is a USB-C port, and the other second connecting member 40 is configured as a USB-A port.

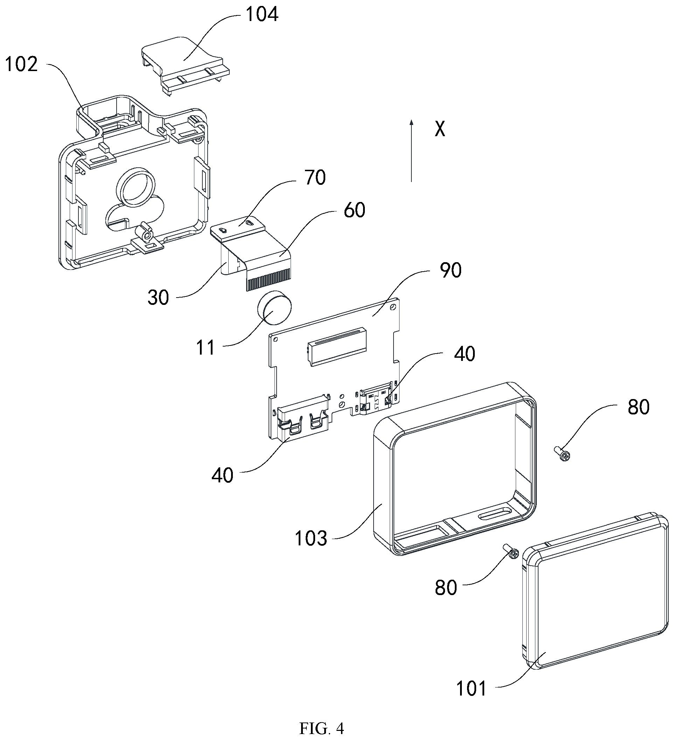

As shown in FIG. 4, a housing forming the first main body 10 and the second main body 20 includes: a front cover 101, a rear shell 102, a middle frame 103 and a top cover 104; the middle frame 103 has a hollow structure. One side of the middle frame 103 is for insertion of a first snap-fit structure of the front cover 101, and the other side of the middle frame 103 is for insertion of a second snap-fit structure of the rear shell 102 and a part of the top cover 104. The first snap-fit structure is snap-fitted with the second snap-fit structure to fix the middle frame 103, the front cover 101 and the rear shell 102. The rear shell 102 is L-shaped, and a short-side portion thereof is combined with the top cover 104 to form the second main body 20. A long-side portion of the rear shell 102 is combined with the middle frame 103 and the front cover 101 to form the first main body 10.

In the present embodiment, the short-side portion of the rear shell 102 is connected to the top cover 104 by ultrasonic welding. The first magnetic member 11 is glued to a side of the rear shell 102 that is close to the front cover 101. The circuit board 90 is fixed to the long-side portion of the rear shell 102 by screws 80, and the two second connecting members 40 are both fixedly connected to the circuit board 90. The first connecting member 30 is connected to the circuit board 90 by means of a flexible connecting member 60, and the flexible connecting member 60 is clamped between the first connecting member 30 and a fixing member 70. The fixing member 70 is clamped between the short-side portion of the rear shell 102 and the top cover 104. This design ensures the mechanical strength required for plugging and unplugging the first connecting member 30.

In other embodiments, the plate member 50 is snap-fitted to the first main body 10. The plate member 50 is provided with a snap-fit portion extending toward the first main body 10, so as to snap-fit to a side of the first main body 10 that is away from the electronic device. Alternatively, the left and right sides or the upper and lower sides of the first main body 10 are provided with snap holes or snap grooves adapted to the snap-fit portion, so as to snap-fit to the left and right sides or the upper and lower sides of the first main body 10.

In other embodiments, the plate member 50 is provided with a suction cup to be detachably connected to the first main body 10.

In other embodiments, the plate member 50 and the first main body 10 are connected by means of Velcro, so that the plate member 50 and the first main body 10 are detachably connected.

In other embodiments, the plate member 50 is provided with a first sliding rail portion arranged in the vertical direction or the transverse direction, and the first main body 10 is provided with a second sliding rail portion adapted to the first sliding rail portion. The first sliding rail portion cooperates with the second sliding rail portion to detach the plate member 50 and the first main body 10.

The foregoing descriptions are merely used for illustrating the technical solutions of the present disclosure rather than limiting the technical solutions of the present disclosure. Any other modifications or equivalent replacements made by those of ordinary skill in the art to the technical solutions of the present disclosure, without departing from the spirit and scope of the technical solutions of the present disclosure, shall fall within the scope of the claims of the present disclosure.

## Claims

1. An L-shaped adapter (100) adapted to electronic devices with different thicknesses, comprising a first main body (10) and a second main body (20), the first main body (10) being connected to the second main body (20), an extending direction of the first main body (10) intersecting with an extending direction of the second main body (20), the second main body (20) being provided with a first connecting member (30) for connecting to an electronic device, an extending direction of the first connecting member (30) being parallel to the extending direction of the first main body (10), and the first main body (10) being provided with a second connecting member (40) for connecting to an external device connected to the electronic device, wherein a plate member (50) is detachably connected to a side of the first main body (10) that is close to the first connecting member (30), so as to adjust a distance between the first main body (10) and the first connecting member (30).

2. The L-shaped adapter (100) adapted to electronic devices with different thicknesses according to claim 1, wherein the plate member (50) is magnetically connected to the first main body (10).

3. The L-shaped adapter (100) adapted to electronic devices with different thicknesses according to claim 2, wherein a first magnetic member (11) is arranged in the first main body (10), the plate member (50) comprises a first magnetic mating member (51), and the first magnetic member (11) and the first magnetic mating member (51) attract each other to magnetically connect the first main body (10) and the plate member (50).

4. The L-shaped adapter (100) adapted to electronic devices with different thicknesses according to claim 3, wherein the plate member (50) comprises a soft member (52) arranged on a side of the first magnetic mating member (51) that is away from the first main body (10).

5. The L-shaped adapter (100) adapted to electronic devices with different thicknesses according to claim 1, wherein the first main body (10) is provided with a first positioning portion (12), the plate member (50) is provided with a second positioning portion (54), and the first positioning portion (12) is fitted into the second positioning portion (54), or the second positioning portion (54) is fitted into the first positioning portion (12), so as to position and assemble the plate member (50) and the first main body (10).

6. The L-shaped adapter (100) adapted to electronic devices with different thicknesses according to claim 1, wherein a first notch (13) is provided at the bottom of the first main body (10), so as to facilitate removal of the plate member (50).

7. The L-shaped adapter (100) adapted to electronic devices with different thicknesses according to claim 6, wherein the plate member (50) is provided with a second notch (55) at a position corresponding to the first notch (13).

8. The L-shaped adapter (100) adapted to electronic devices with different thicknesses according to claim 7, wherein the dimension of the first notch (13) in a vertical direction (X) is larger than that of the second notch (55) in the vertical direction (X).

9. The L-shaped adapter (100) adapted to electronic devices with different thicknesses according to claim 1, wherein the first main body (10) is provided with two second connecting members (40), one of which is used for charging, and the other for data transmission.

10. The L-shaped adapter (100) adapted to electronic devices with different thicknesses according to claim 1, wherein the plate member (50) is snap-fitted to the first main body (10).

11. The L-shaped adapter (100) adapted to electronic devices with different thicknesses according to claim 7, wherein a first notch (13) is provided on the side of the first main body (10), so as to facilitate removal of the plate member (50).

12. The L-shaped adapter (100) adapted to electronic devices with different thicknesses according to claim 7, wherein the dimension of the first notch (13) in a transverse direction is larger than that of the second notch (55) in the transverse direction.

13. The L-shaped adapter (100) adapted to electronic devices with different thicknesses according to claim 1, wherein an avoidance notch (56) for avoiding the second main body (20) is provided at the top of the plate member (50), so as to completely cover a side of the first main body (10) that is close to the electronic device.

14. The L-shaped adapter (100) adapted to electronic devices with different thicknesses according to claim 1, wherein the plate member (50) and the first main body (10) are connected by means of Velcro.

15. The L-shaped adapter (100) adapted to electronic devices with different thicknesses according to claim 1, wherein the plate member (50) is provided with a first sliding rail portion, the first main body (10) is provided with a second sliding rail portion, and the first sliding rail portion is in sliding-rail connection with the second sliding rail portion.
